# EUROPEAN PATENT APPLICATION

(11) **EP 2 113 695 A1**
(43) Date of publication of application: **04.11.2009**
(21) Application number: 07785226.7
(22) Date of filing: 01.08.2007
(51) Int. Cl.: F16K 17/04, F16J 13/12, B65D 50/04, A47J 27/09

(54) **A SAFETY PLUG FOR A CONTAINER GENERATING HIGH PRESSURE FLUID**

(30) Priority: 02.08.2006 CN 200610069807
(71) Applicant: Tsann Kuen (China) Enterprise Co., Ltd, Xiamen Fujian 361006 (CN)
(72) Inventor: WU, Cankun, Xiamen, Fujian 361006 (CN)
(74) Representative: Garavelli, Paolo
(86) International application number: PCT/CN2007/002312
(87) International publication number: WO 2008/017245

(57) **Abstract**

A safety plug for a container generating high pressure fluid, said container comprising a shell for containing the high-pressure fluid, and an aperture is disposed in said shell, said safety plug comprising: a locking body, a safety cap mounted on said locking body, and a reset element mounted between said locking body and said safety cap. Said locking body comprising a locking mechanism airtightly screwed in said aperture of the container, and a clamping mechanism assembled with said locking mechanism, said clamping mechanism has an assembly tube, and a clamping ring protruded from the outer surface of said assembly tube. When the cap body of said safety cap is pressed down and clamp with said clamping ring, said cap body can drive the locking mechanism to rotate relative to said shell to detach from the aperture. By the simple structure design of the clamping mechanism engaging with the safety cap, and by the configuration of the reset element, the manufacture and assembly of the safety plug can be more simple.

## Description

### FIELD OF THE INVENTION

The present invention relates to a plug, particularly, to a safety plug for a container generating high-pressure fluid.

### BACKGROUND OF THE INVENTION

Many container can generate high pressure fluid, for example, the high-pressure stream generated by high-pressure steam iron, pressure sterilizer and pressure cooker etc., to ensure that the high pressure steam inside such containers can be maintained below a preset pressure, generally, a pressure-relief valve is disposed in an aperture opened outwardly of the shell of the container so as to let the high-pressure stream rush out timely to avoid any hazards caused by the high-pressure stream. And to replenish the water to the container via the aperture timely, generally, the pressure-relief valve is detachably screwed in the aperture, and a safety cap which can rotate the pressure-relief valve so as to detach the pressure-relief valve from the aperture is disposed on the pressure-relief valve, for example, a safety plug disclosed in EP1471293B1 comprises a pressure-relief valve and a safety cap.

The safety plug has a "Poke-Yoke" safety design, i.e., the user can not screw out the pressure-relief valve from the aperture by rotate the safety cap directly, the safety cap must be urged against the pressure-relief valve and grip to a special structure of the pressure-relief valve, thus the pressure-relief valve can be rotated and screwed out from the container. Although the safety cap disclosed in above-mentioned patent can improve the using safety of the pressure-relief valve, however, the structure of the safety cap is quite complex to be manufactured, it is needed to be improved.

### SUMMARY OF THE INVENTION

Accordingly, the object of the present invention is to provide a safety plug which has simple structure and is easy to be manufactured and assembled.

Therefore, the present invention provides a safety plug for a container generating high pressure fluid, said container comprising a shell for containing the high-pressure fluid, and an aperture is disposed in said shell, said safety plug comprising: a locking body, a safety cap mounted on said locking body, and a reset element mounted between said locking body and said safety cap. Said locking body comprising a locking mechanism arranged in said aperture, and a clamping mechanism which is assembled with the locking mechanism and is disposed on the outside of said shell. Said clamping mechanism has a vertical assembly tube connecting to said locking mechanism and having a limit groove formed by a recess of the outer surface, and a clamping ring protruded from the outer surface of the assembly tube and having a first clamping portion. Said safety cap comprising a cap body which is disposed on the outside of the assembly tube and has a second clamping portion which can engage with the first clamping portion correspondingly, and a plurality of limit hooks which insert in said limit groove so that the cap body is limited on the assembly tube and can move vertically relative to the assembly tube. Said reset element disposed between the locking body and cap body, having an elasticity which always urge the second clamping portion upwardly to leave from the first clamping portion, and when the cap body is pressed downwardly to let the clamping portions engaged with each other, said cap body can drive the clamping mechanism to drive the locking mechanism rotate relative to the shell.

### BRIEF DESCRIPTION OF THE DRAWINGS

FIG.1 is a perspective view of the safety plug for a container generating high-pressure fluid of the present invention according to a preferred embodiment;

FIG.2 is an exploded view of the embodiment of FIG.1.

FIG.3 is a sectional perspective view of safety cap of the embodiment of FIG.1;

FIG.4 is a side sectional view of the embodiment of FIG.1;

FIG.5 is similar view of FIG.4, illustrates a state of a cap body pressed downwardly to abut against a clamping ring; and

FIG.6 is similar view of FIG.4, illustrates a state of an airtight element moved by the pressure of steam.
In these figures:
- 1: container
- 11: shell
- 110: aperture
- 3: locking body
- 4: locking mechanism
- 41: valve tube
- 411: pressure-relief hole
- 412: pressure-relief opening
- 42: airtight element
- 421: block
- 422: airtight gasket
- 43: pushing element
- 44: urging element
- 45: clamping ring
- 46: airtight gasket
- 5: clamping mechanism
- 51: assembly tube
- 511: limit groove
- 512: limit protrusion
- 52: clamping ring
- 521: first clamping portion
- 53: position ring
- 6: safety cap
- 61: cap body
- 611: second clamping portion
- 62: limit hook
- 621: clamping portion
- 63: position board
- 7: reset element

### DETAILED DESCRIPTION OF THE PREFERRED EMBODIMENT

The various objects and advantages of the present invention will be more readily understood from the following detailed description when read in conjunction with the appended drawings.

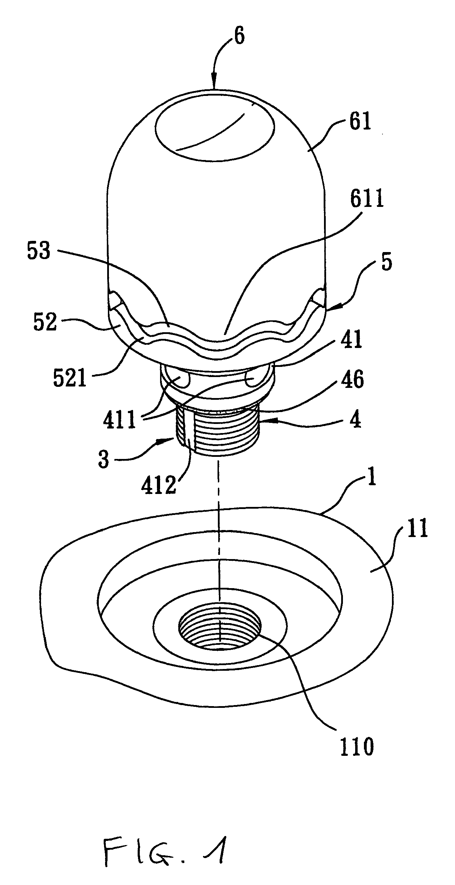

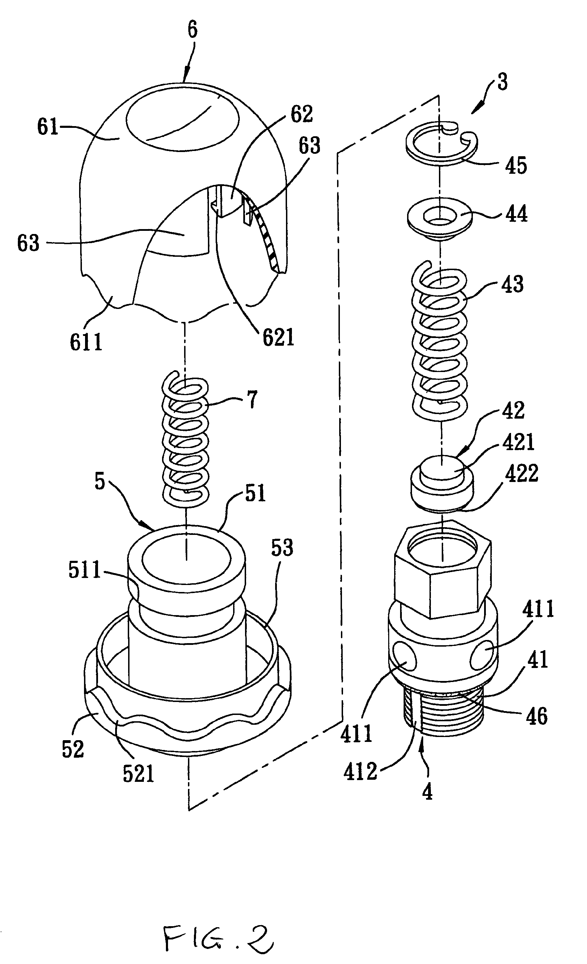

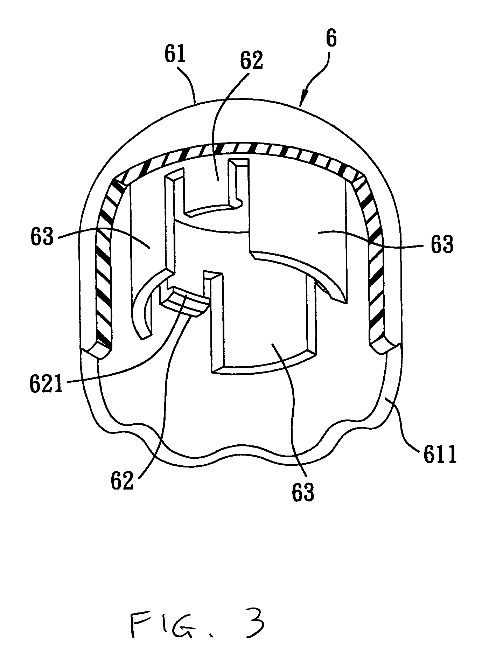

Referring to FIG.1 to FIG.3, they shows the safety plug for a container generating high pressure fluid of the present invention, the container 1 can be pressure cooker, pressure sterilizer, high-pressure stream iron etc., the container 1 comprises a shell 11 for containing the liquid for generating high-pressure fluid, and the shell 11 has an aperture 110 for communicating the inside and outside so as to allow the liquid or air in or out the container, and the aperture 110 is threaded in the inner periphery, In this embodiment, the high-pressure fluid is high pressure stream, without limitation, the high-pressure fluid also can be high-pressure liquid.

The safety plug comprises a locking body 3 vertically screwed in the aperture 110, a safety cap 6 covered on the locking body 3, and a reset element 7 mounted between the locking body 3 and the safety cap 6. the locking body 3 comprises a locking mechanism 4 airtightly screwed with the aperture 110, and a clamping mechanism 5 fixed to the locking mechanism 4 and connecting to the safety cap 6.

The locking mechanism 4 includes an internally-hollow valve tube 41 which is screwed in the aperture 110 and extended out the shell 11, an airtight element 42, an elastic element 43, an urging element 44 and a C-shape clamping ring 45 are disposed in the valve tube 41 and connected vertically one by one respectively, and an airtight circular gasket 46 sleeved on the outside of the lower portion of the valve tube 41. The valve tube 41 has a circumferential succession of pressure-relief holes 411 communicated with the aperture 111 respectively, and a pressure-relief opening 412 recessed in the outer surface of the valve tube 41 and extending upwardly from the bottom edge. The pressure-relief opening 412 is formed in the out surface of the valve tube 41 in the section in which the valve tube 41 screwing with the aperture 110, and the recessed depth is gradually shallower from bottom to top.

The airtight element 42 has a block 421 elastically abut against the bottom of the pushing element 43, and an airtight gasket 422 embedded in the bottom of the block 421, and the airtight gasket 422 can airtightly seal the valve tube 41. The C-shaped clamping ring 45 is embedded in the inner periphery of the valve tube 41 to make the airtight element 42, the pushing element 43 and the urging element 44 stacked and limited in the valve tube 41. The pushing element 43 has a preset pushing elasticity which can always urge the airtight element 42 downwardly to airtightly seal the valve tube 41 so as to be airtightly blocked between the aperture 110 and pressure-relief holes 411. In this embodiment, the pushing element 43 is a spring, and the airtight gasket is a rubber gasket, without limitation, the other elements are also applicable.

The clamping mechanism 5 has a vertical assembly tube 51 sleeved and fixed on the upper portion of the valve tube 41, an annular clamping ring 52 radially protruded out from the outer surface of the assembly tube 51 and the outer radial portion is bended and extended upwardly, and an annular position ring 53 which is extended upwardly from the inner periphery of the clamping ring 52 and is higher than the top edge of the clamping ring 52. The assembly tube 51 has an annular limit groove 511 radially recessed in the upper portion of the outer surface of the valve tube 51, and a annular limit protrusion 512 radially protruded from the upper portion of the inner side. The top edge of the clamping ring 52 formed an annular first clamping portion 521 with a wave shape.

The safety cap 6 comprises a cap body 61 covered on assembly tube 51 of the clamping mechanism 5 from top, and three limit hooks 62 and three position boards 63 spaced and extended downwardly from the inner side of the cap body 61. The bottom edge of the cap body 61 formed an annular second clamping portion which has a wave shape and can engage with the first clamping portion 521. The limit hooks 62 abut against the outer surface of the assembly tube 51 oppositely and clamped and limited in the limit groove 511 oppositely via its clamping portion 621 respectively, and the clamping portion 621 can move vertically in the annular limit groove 511 so that the cap body 61 can rotate relative to the assembly tube 51 and can move vertically and limited in the assembly tube 51.

The reset element 7 downwardly inserted and limited on the top of the limit protrusion 512 of the assembly tube 51, and always elastically push the inner side of the cap body 61 upwardly so that the cap body 61 can be pressed downward flexibly to drive the clamping portion 521, 611 engage with and limit with each other.

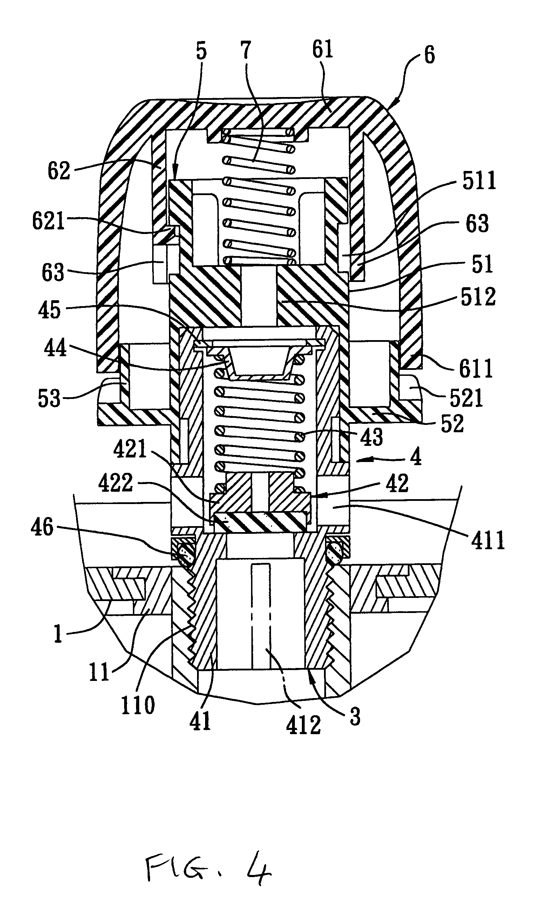

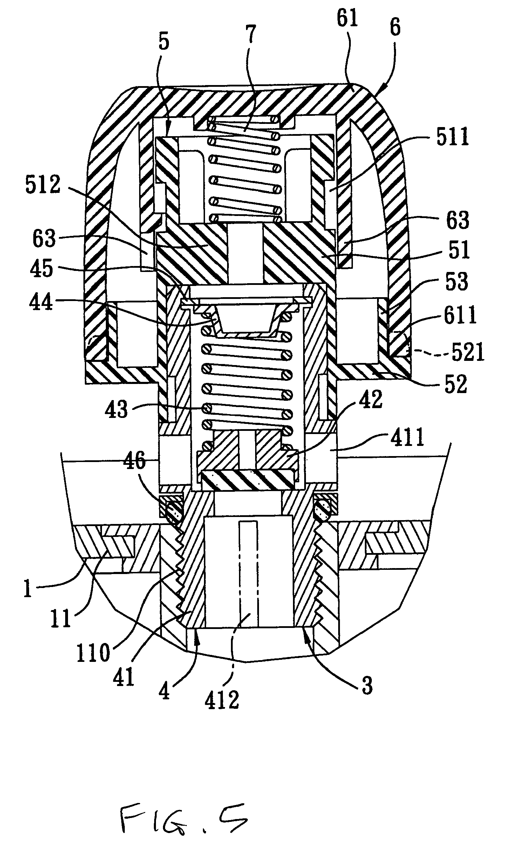

Referring to FIG.4 and FIG.5, in normal state, the cap body 61 can rotate relative to the locking body 3 freely, if the locking body 3 is needed to be fixed in the aperture 110 of the shell 11, firstly, urge the bottom of the valve tube 41 of the locking mechanism 4 abut against the aperture 110, at the same time, press down the cap body 61 to urge the second clamping portion 611 engage with the first clamping portion 521. Then rotate the cap body 61 relative to the shell 11, so that the second clamping portion 611 will drive the clamping ring 52 to rotate the valve tube 51 and then screw in the aperture 110 step by step, till the airtight gasket 46 sandwiched in the valve tube 41 and the shell 11 so as to airtightly seal the aperture 110.

When the force urged on the cap body 61 removed, the cap body 61 will be repositioned immediately by the upwardly reset force of the reset element 7, so that the second clamping portion 611 detached from the first clamping portion 521, then the cap body 61 can rotate freely relative to the locking body 3 again and can not drive the locking body 3 to rotate, thus can avoid the children or the user screwing out the locking body 3 carelessly to cause hazards, therefore it can ensure the using safety of the safety plug.

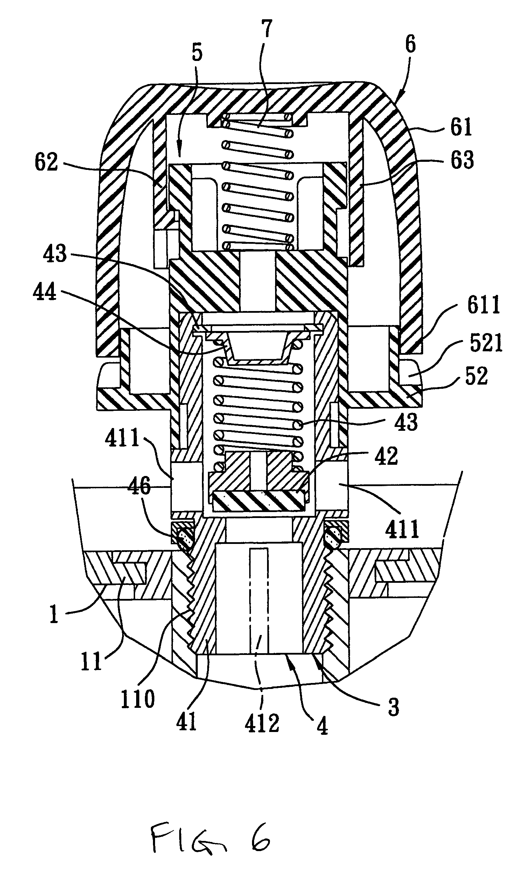

Referring to FIG.5 and FIG.6, in addition, it must note that, when the stream pressure in the shell 11 increased continually in the using of the container 1, the stream will be filled in the lower portion of the valve tube 41 below the airtight element 42 through the aperture 110, when the stream pressure reach a preset value, i.e., a force which can overcome the elasticity of the element 43 urge downwardly on the airtight element 42, the high-pressure stream will push the airtight element 42 upwardly to detach from the aperture 110 and discharged out immediately from the pressure-relief holes 411.When the pressure of the high-pressure stream is lower than the elasticity of the element 43 by discharging, the airtight element 42 will move downwardly to airtightly seal the valve tube 41 again, until the stream pressure in the shell 11 is higher than the elasticity again. Thus, the high-pressure stream will be maintained in a safe state by the timely discharging of the high-pressure stream.

On the contrary, if the locking body 3 is needed to be detached from the shell 11 to expose the aperture 110 so as to refill liquid via the aperture 110, the user can press down the safety cap 6 to let the second clamping portion 611 insert in the first clamping portion 521, then rotate the cap body 61 relative to the shell 11, and the locking body 3 will be rotated synchronously, thus the valve 41 will be rotated relative to the shell 11 and screwed out the aperture 110 gradually.

In the process of the valve tube 41 being removed from the aperture 110, when the pressure-relief opening 412 of the valve tube 41 is exposed from the shell 11, the stream in the shell 11 will rush out immediately via the pressure-relief opening 412, and the more exposed portion, the more stream rushed out. Thus it can be seen, before the valve tube 41 removed from the aperture 110 entirely, the stream pressure will be lower by abovementioned process to avoid that the stream pressure is too high so that in the moment of the valve tube 41 screwed out the aperture 110, the entire safety plug will be push out by the rushed out high-pressure stream, and the user may be scalded. Therefore, the use of the container 1 will be safer.

In this embodiment, each time the safety cap 6 is pressed down to let the second clamping portion 611 engage with the first clamping portion 521, the inner side of the cap body 61 will be limit and abut against the outer surface of the position ring 53 of the clamping mechanism 5 And the limit hooks 62 and position boards 63 will be abut against the outer surface of the assembly pipe 51 oppositely to ensure that the cap body 61 can not be shake relative to the clamping mechanism 5 and further ensure that the clamping portions 611, 521 can be connected stably, and can stably drive the locking body 3 to rotate, without limitation, in the other embodiments, the shapes of the clamping portion 521, 611 may not be the wave shape, and the position ring 53 and the position board 63 are not necessary ,

In addition, the locking mechanism 4 of the locking body 3 in this embodiment is used for airtightly seal the aperture 110 and used for being the safety valve so that the high-pressure stream in the shell 11 can be rushed out timely to maintain in a safety stream pressure range, in application, the locking body 3 is not necessary to be with the function of safety valve, i.e. the airtight element 42, the pushing element 43, the urging element 44 and the ring 45 are not necessary,

In summary, by the simple structure design of the clamping ring 52 of the clamping mechanism 5 engaging with the cap body 61 of the safety cap 6, and by the configure of the reset element 7 arranging between the clamping mechanism 5 and the cap body 6, the safety cap 6 can be rotate relative to the locking body 3 and can not open the locking body 3 in the normal state when the safety cap 6 is not be pressed. Therefore, it can ensure the using safety of the safety plug, further by the configuration of the pressure-relief opening 412 of the valve pipe 41, the detachment of the locking body 3 from the shell 11 will be more safety. In addition, the locking mechanism 4 of the locking body 3 has another function of being used as a safety valve, this can adjust the fluid pressure in the shell 11 to improve the safety of using the container. Thus, the object of the present invention is achieved.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A safety plug for a container generating high pressure fluid, said container comprising a shell having an aperture for containing the high-pressure fluid, said safety plug comprising:
a locking body comprising a locking mechanism arranged in said aperture, and a clamping mechanism which is assembled with the locking mechanism and is disposed on the outside of said shell. said clamping mechanism has an vertical assembly tube connecting to said locking mechanism and having a limit groove recessed on the outer surface, and a clamping ring protruded from the outer surface of said assembly tube and having a first clamping portion; and
a safety cap comprising a cap body which is disposed on the outside of the assembly tube and has a second clamping portion which can engage with said first clamping portion correspondingly, and a plurality of limit hooks which insert in said limit groove so that the cap body is limited on the assembly tube and can move vertically relative to the assembly tube.

2. The safety plug for a container generating high pressure fluid according to claim 1, wherein said clamping mechanism further comprising a position ring connected to said clamping ring, and when the clamping portions engage with each other, the inner side of the cap body will abut against and limit on the outer surface of the position ring.

3. The safety plug for a container generating high pressure fluid according to claim 1, wherein said clamping portions are wave shape which can engage to each other respectively.

4. The safety plug for a container generating high pressure fluid according to claim 1, wherein said clamping ring protruded from the outer surface of said assembly tube is more near to said shell than the limit groove of said assembly.

5. The safety plug for a container generating high pressure fluid according to claim 1 further comprising a reset element disposed between the locking body and cap body, which having an elasticity always urge the second clamping portion upwardly to leave from the first clamping portion, and when the cap body is pressed downwardly to let the clamping portions engaged with each other, said cap body can drive the clamping mechanism to drive the locking mechanism rotate relative to the shell.

6. The safety plug for a container generating high pressure fluid according to claim 5, wherein said assembly tube having an annular limit protrusion radially protruded from the inner side, said reset element is a spring elastically supported between said limit protrusion and cap body.

7. The safety plug for a container generating high pressure fluid according to claim 1, wherein said locking mechanism comprising an internally-hollow valve tube which is screwed in the aperture and connected to said assembly tube and formed a plurality of pressure-relief holes in the outer surface, an airtight element disposed in said valve tube and airtightly sealed between said pressure-relief holes and aperture, and can be pushed by the high-pressure fluid discharger from the aperture, and an elastic element disposed in said valve tube and always make said airtight element overcome the preset pressure of the high-pressure fluid,

8. The safety plug for a container generating high pressure fluid according to claim 7, wherein one end of said pushing element elastically abut against said airtight element, and said locking mechanism further comprising a urging element disposed in said valve tube and elastically abut against the other end of said pushing element, and a clamping ring clamped in said valve tube and make the urging element, pushing element and airtight element limit in said valve tube.

9. The safety plug for a container generating high pressure fluid according to claim 7, wherein a pressure-relief opening recessed in the outer surface of the valve tube in which the valve tube airtightly screwed in said aperture, said opening extended from the edge of inner side to the outside of said valve tube, and when said valve tube rotated to be screwed out from said aperture, the high pressure fluid will be discharger out via said pressure-relief opening.

10. The safety plug for a container generating high pressure fluid according to claim 7, wherein said locking mechanism further comprising an airtight annular gasket sleeved on said valve tube and airtightly sealed between said valve tube and said aperture.

11. The safety plug for a container generating high pressure fluid according to claim 1, wherein said limit hooks are spacingly extended downwardly from the inner side of the cap body, and said safety cap further comprising a plurality of position boards spacingly protruded from the inner side of said cap body and oppositely abut against and limit on the outer surface of said assembly tube.

12. A safety plug for a container generating high pressure fluid, said container comprising a shell having an aperture for containing the high-pressure fluid, said safety plug comprising:
a locking body comprising a locking mechanism arranged in said aperture, and a clamping mechanism which is assembled with said locking mechanism and is disposed on the outside of said shell. said clamping mechanism has an vertical assembly tube connecting to said locking mechanism, and a clamping ring protruded from the outer surface of said assembly tube and the top edge of said clamping ring formed a first clamping portion; and
a safety cap comprising a cap body disposed on the outside of the assembly tube and can rotate relative to said assembly tube, the bottom edge of said cap body formed a second clamping portion which can engage with the first clamping portion, and when the clamping portions engaged with each other, said cap body can drive the clamping mechanism to drive the locking mechanism rotate relative to the shell.

13. The safety plug for a container generating high pressure fluid according to claim 12, wherein a limit groove recessed in the outer surface of said assembly tube of said clamping mechanism, and said safety cap further comprising a plurality of limit hooks insert in said limit groove so that the cap body can move vertically and limited in the assembly tube.

14. The safety plug for a container generating high pressure fluid according to claim 13, wherein said clamping ring protruded from the outer surface of said assembly tube is more near to said shell than the limit groove of said assembly.

15. The safety plug for a container generating high pressure fluid according to claim 12 further comprising a reset element disposed between the locking body and cap body, which having an elasticity always urge the second clamping portion upwardly to leave from the first clamping portion, and when the cap body is pressed downwardly to let the clamping portions engaged with each other, said cap body can drive the clamping mechanism to drive the locking mechanism rotate relative to the shell.

16. The safety plug for a container generating high pressure fluid according to claim 15, wherein said clamping mechanism further comprising a position ring connected with clamping ring, and when said clamping portions engaged with each other, the inner side of cap body can be limit and abut against the outer surface of said position ring.

17. The safety plug for a container generating high pressure fluid according to claim 15, wherein said clamping portions is a wave shape which can engage with each other respectively.

18. The safety plug for a container generating high pressure fluid according to claim 15, wherein said assembly tube having an annular limit protrusion radially protruded from the inner side, said reset element is a spring elastically supported between said limit protrusion and cap body.

19. The safety plug for a container generating high pressure fluid according to claim 15, wherein the locking mechanism comprising an internally-hollow valve tube which is screwed in the aperture and connected to said assembly tube and formed a plurality of pressure-relief holes in the outer surface, an airtight element airtightly sealed between said pressure-relief holes and aperture and can be pushed by the high-pressure fluid discharged from the aperture, and an elastic pushing element disposed in said valve tube and always make said airtight element overcome the preset pressure of the high-pressure fluid,

20. The safety plug for a container generating high pressure fluid according to claim 19, wherein one end of said pushing element elastically abut against said airtight element, and said locking mechanism further comprising an urging element disposed in said valve tube and elastically abut against the other end of said pushing element, and a clamping ring clamped in said valve tube and make the urging element, pushing element and airtight element limit in said valve tube.

21. The safety plug for a container generating high pressure fluid according to claim 19, wherein a pressure-relief opening recessed in the outer surface of the valve tube in the section in which the valve tube airtightly screwed in said aperture and said opening extended from the of inner side edge to the outside edge, and when said valve tube rotate to screw out said aperture, the high pressure fluid will be discharged out via said pressure-relief opening.

22. The safety plug for a container generating high pressure fluid according to claim 19, wherein said locking mechanism further comprising an airtight annular gasket sleeved on said valve tube and airtightly sealed between said valve tube and said aperture.

23. The safety plug for a container generating high pressure fluid according to claim 19, wherein said limit hooks are spacingly extended downwardly from the inner side of the cap body, and said safety cap further comprising a plurality of position boards spacingly protruded from the inner side of said cap body and oppositely abut against and limit on the outer surface of said assembly tube.

24. A safety plug for an electric iron which can generate high pressure stream, said electric comprising a shell having an aperture for containing stream, said safety plug comprising:
a locking body comprising a locking mechanism arranged in said aperture, and a clamping mechanism which is assembled with said locking mechanism and is disposed on the outside of said shell, said clamping mechanism having an vertical assembly tube connecting to said locking mechanism and having a limit groove recessed on the outer surface, and a clamping ring protruded from the outer surface of the assembly tube and having a first clamping portion; and
a safety cap comprising a cap body which is disposed on the outside of the assembly tube and has a second clamping portion which can engage with the first clamping portion correspondingly, and a plurality of limit hooks which insert in said limit groove so that the cap body is limited on the assembly tube and can move vertically relative to the assembly tube.

25. A safety plug for an electric iron which can generate high pressure stream, said electric comprising a shell having an aperture for containing stream, said safety plug comprising:
a locking body comprising a locking mechanism arranged in said aperture, and a clamping mechanism which is assembled with the locking mechanism and is disposed on the outside of said shell. said clamping mechanism has an vertical assembly tube connecting to said locking mechanism, and a clamping ring protruded from the outer surface of the assembly tube, and the top edge of said clamping ring formed a first clamping portion; a safety cap comprising a cap body which is disposed on the outside of the assembly tube and can rotate relative to said assembly tube, and the bottom edge of said cap body formed a second clamping portion which can engage with the first clamping portion, when said clamping portions engaged with each other, said cap body can drive the clamping mechanism to drive said locking mechanism rotate relative to said shell.
